# EUROPEAN PATENT SPECIFICATION

(11) **EP 3 205 888 B1**
(45) Date of publication and mention of the grant of the patent: **25.03.2020**
(21) Application number: 15849172.0
(22) Date of filing: 06.10.2015
(51) Int. Cl.: F15B 11/04, F15B 11/00, F15B 11/08, F16K 31/383, F16K 51/00, F15B 13/01

(54) **FLUID PRESSURE CONTROL DEVICE**
FLUIDDRUCKSTEUERUNGSVORRICHTUNG
DISPOSITIF DE RÉGULATION DE PRESSION DE FLUIDE

(30) Priority: 06.10.2014 JP 2014205870
(43) Date of publication of application: 16.08.2017
(73) Proprietor: KYB-YS Co., Ltd., Hanishina-gun, Nagano 389-0688 (JP)
(72) Inventor: MATSUZAKI, Keiichi, Hanishina-gun Nagano 389-0688 (JP); KOIKE, Fumiaki, Hanishina-gun Nagano 389-0688 (JP)
(74) Representative: TBK
(86) International application number: PCT/JP2015/078391
(87) International publication number: WO 2016/056564

(56) References cited:
- EP-A2- 1 387 089
- WO-A1-2013/137235
- JP-A- 2013 136 376
- JP-A- 2014 142 025
- US-A1- 2014 174 063

## Description

The present invention relates to a fluid pressure control device according to the preamble of claim 1, the features of which are known from e.g. document EP 1 387 089 A2. The fluid pressure control device includes a load retaining mechanism that retains load pressure on a load-side pressure chamber of a fluid pressure cylinder.

Document JP 2004-60821 A (family member of EP 1 387 089 A2) discloses a hydraulic circuit for controlling a boom cylinder of a hydraulic shovel. The hydraulic circuit includes a boom cylinder that extends and contracts by working oil supplied from a pump, a control valve that switches supply/ discharge of the working oil to/from the boom cylinder, and a retaining valve circuit provided in a load pipeline of the boom cylinder.

The retaining valve circuit has a retaining valve and a check valve that are connected in parallel. The check valve allows the working oil to flow only from the control valve to the load-side chamber of the boom cylinder. The retaining valve has an neutral position that disconnects the load-side chamber from the control valve, and a communication position that allow the load-side chamber to communicate with the control valve. The retaining valve is held in the neutral position by a biasing force of a spring, and is switched from the neutral position to the communication position as a spool moves against the biasing force of the spring by receiving the pilot pressure.

When the operator operates the remote control valve in a state in which the boom cylinder is retained at a predetermined operation position by the retaining valve, the pilot pressure is supplied to the retaining valve in accordance with an operated amount. This causes the retaining valve to open, whereby the working oil in the load-side chamber of the boom cylinder flows to the control valve via the retaining valve. By this, the boom cylinder contracts.

In a manufacturing stage of the hydraulic shovel, more specifically, in a stage in which the retaining valve is attached to the hydraulic shovel and the pilot passage is connected to the retaining valve, air is mixed inside the pilot chamber of the retaining valve to which the pilot pressure is supplied. When the retaining valve is switched from the neutral position to the communication position due to a lever operation by an operator in this state, a response delay in the movement of the spool may occur and may worsen operability of the boom cylinder.

In order to remove the air in the pilot chamber, a structure can be considered in which an orifice or a gap is provided between the pilot chamber and the drain passage of the working oil. However, with such a structure, the pilot pressure in the pilot chamber is constantly drained to the drain passage. This causes unstableness to the pilot pressure, and may cause a response delay and variable response, at a time of slight operation of the retaining valve.

The object of the present invention is to provide a fluid pressure control device including a load retaining mechanism capable of removing air inside the pilot chamber while being able to suppress an effect given on responsiveness.
The object of the invention is achieved by a fluid pressure control device according claim 1. Advantageous embodiments are carried out according to claims 2 and 3.

According to one aspect of the present invention, a fluid pressure control device includes a cylinder configured to extend and contract by working fluid supplied from a pump to drive a load, a control valve configured to switch supply/discharge of the working fluid to/from the cylinder to control the extending and contracting of the cylinder, a pilot valve configured to lead pilot pressure to the control valve, a main passage configured to connect the control valve and a load-side pressure chamber of the cylinder to which load pressure acts due to the load when the control valve is in a neutral position, and a load retaining mechanism disposed on the main passage and configured to retain load pressure in the load-side pressure chamber when the control valve is in the neutral position, wherein the load retaining mechanism includes a check valve configured to allow the working fluid to flow only from the control valve to the load-side pressure chamber, a bypass passage configured to lead the working fluid in the load-side pressure chamber to the control valve by bypassing the check valve, and a switching valve disposed on the bypass passage and configured to switch an opened or closed state of the bypass passage, the switching valve includes a pilot chamber to which pilot pressure is leaded via the pilot valve, a spool configured to move in a valve-opening direction in accordance with the pilot pressure in the pilot chamber, a biasing member configured to bias the spool in a valve-closing direction, and a conduction path configured to lead one part of a pilot pressure fluid leaded to the pilot chamber, to a drain passage, the conduction path is configured to communicate with the drain passage, when the switching valve moves by a predetermined stroke amount or more in the valve-opening direction.

### BRIEF DESCRIPTION OF DRAWINGS

Fig. 1 is a view showing one part of a hydraulic shovel.
Fig. 2 is a hydraulic circuit diagram of a fluid pressure control device according to a first embodiment of the present invention.
Fig. 3 is a sectional view of a load retaining mechanism of a fluid pressure control device according to the first embodiment of the present invention.
Fig. 4 is a sectional view of the load retaining mechanism of a fluid pressure control device according to the first embodiment of the present invention.
Fig. 5 is a sectional view of the load retaining mechanism of a fluid pressure control device according to the first embodiment of the present invention.
Fig. 6A is an enlarged view showing a piston of a switching valve in an enlarged manner.
Fig. 6B is an enlarged view showing a piston of a switching valve in an enlarged manner.
Fig. 7 is a sectional view of a load retaining mechanism of a fluid pressure control device according to a second embodiment of the present invention.
Fig. 8 is a sectional view of the load retaining mechanism of a fluid pressure control device according to the second embodiment of the present invention.
Fig. 9A is a side view showing a groove formed on an outer circumferential surface of a piston.
Fig. 9B is a partial sectional view showing a cross sectional shape of the groove formed on the outer circumferential surface of the piston.
Fig. 9C is partial sectional view showing a cross sectional shape of the groove formed on the outer circumferential surface of the piston.
Fig. 10 is a sectional view of a load retaining mechanism of a fluid pressure control device according to a first comparative example useful for better understanding the scope of the present invention.
Fig. 11 is a sectional view of a load retaining mechanism of a fluid pressure control device according to the first comparative example useful for better understanding the scope of the present invention.
Fig. 12 is a sectional view of a load retaining mechanism of a fluid pressure control device according to a second comparative example useful for better understanding the scope of the present invention.
Fig. 13 is a sectional view of the load retaining mechanism of a fluid pressure control device according to the second comparative example useful for better understanding the scope of the present invention.
Fig. 14 is a hydraulic circuit diagram of a fluid pressure control device according to the first comparative example useful for better understanding the scope of the present invention.

Embodiments of the present invention will be described with reference to the drawings. Identical reference signs provided between different drawings will represent identical configurations.

### First Embodiment

First, a first embodiment will be described.

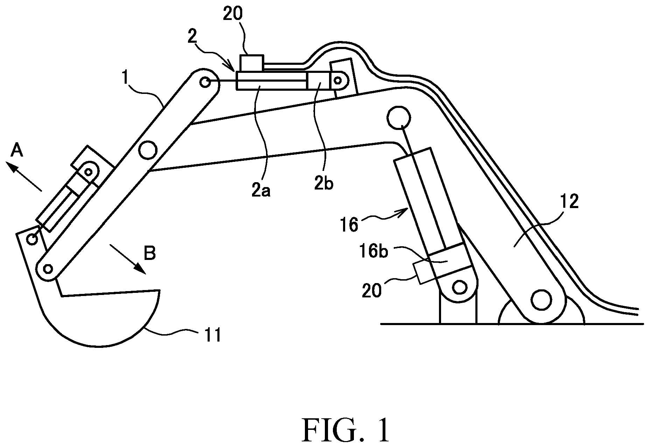

A hydraulic control device 100 serving as a fluid pressure control device controls operations of a hydraulic work machine such as a hydraulic shovel. In the present embodiment, the hydraulic control device 100 controls extending and contracting movements of a cylinder 2 that drives an arm 1 serving as a load of the hydraulic shovel shown in Fig. 1.

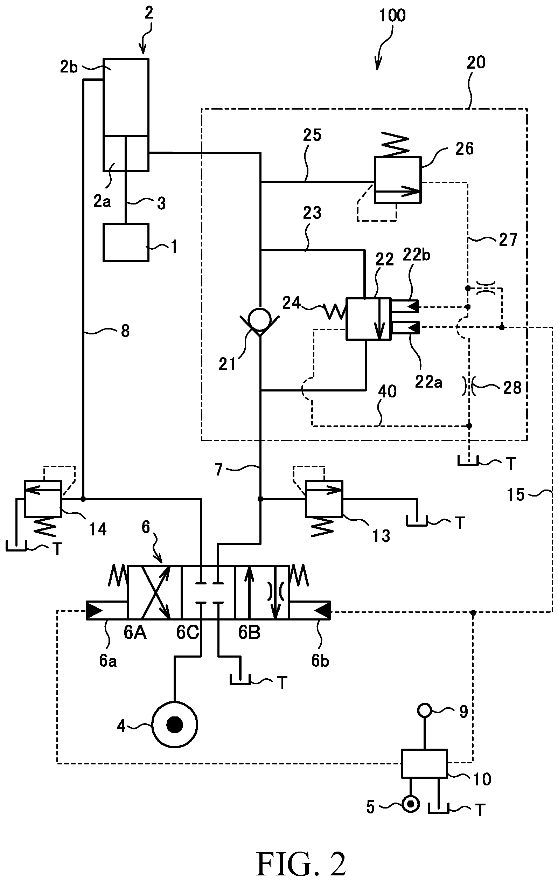

First, a hydraulic circuit of the hydraulic control device 100 is described with reference to Fig. 2.

The cylinder 2 is partitioned into a rod-side pressure chamber 2a and a counter rod-side pressure chamber 2b by a piston rod 3 that slidably moves within the cylinder 2.

An engine is installed into the hydraulic shovel, and by the power of the engine are driven a pump 4 and a pilot pump 5 that serve as hydraulic sources.

Working oil (working fluid) that is discharged from the pump 4 is supplied to the cylinder 2 via a control valve 6.

The control valve 6 and the rod-side pressure chamber 2a of the cylinder 2 are connected by a first main passage 7 serving as a main passage, and the control valve 6 and the counter rod-side pressure chamber 2b of the cylinder 2 are connected by a second main passage 8.

The control valve 6 is operated by pilot pressure oil supplied to the pilot chambers 6a and 6b. The pilot pressure oil is supplied to the pilot chambers 6a and 6b from the pilot pump 5 via a pilot valve 10 in response to manual operation of an operation lever 9 by an operator of the hydraulic shovel.

More specifically, when pilot pressure is leaded to the pilot chamber 6a, the control valve 6 switches to position 6A. Working oil from the pump 4 is supplied to the rod-side pressure chamber 2a via the first main passage 7, and working oil in the counter rod-side pressure chamber 2b is discharged to a tank T via the second main passage 8. This causes the cylinder 2 to contract, and the arm 1 lifts up in a direction of arrow A shown in Fig. 1.

On the other hand, when the pilot pressure is leaded to the pilot chamber 6b, the control valve 6 switches to position 6B. The working oil from the pump 4 is supplied to the counter rod-side pressure chamber 2b via the second main passage 8, and the working oil in the rod-side pressure chamber 2a is discharged to the tank T via the first main passage 7. This causes the cylinder 2 to extend, and the arm 1 descends in a direction of arrow B shown in Fig. 1.

When no pilot pressure is leaded to the pilot chambers 6a and 6b, the control valve 6 switches to position 6C. The supply/discharge of the working oil to/from the cylinder 2 is discontinued, and the arm 1 is kept in a stopped state.

As such, the control valve 6 includes three switching positions, i.e., a contraction position 6A in which the cylinder 2 is contracted, an extension position 6B in which the cylinder 2 is extended, and an neutral position 6C in which the load of the cylinder 2 is retained. Furthermore, the control valve 6 controls the extension and contraction of the cylinder 2 by switching the supply and discharge of the working oil to/from the cylinder 2.

As shown in Fig. 1, when the control valve 6 is switched to the neutral position 6C while the bucket 11 is lifted and the movement of the arm 1 is stopped, force in the extending direction acts on the cylinder 2 due to the dead load of members such as the bucket 11 and the arm 1. As such, in the cylinder 2 that drives the arm 1, the rod-side pressure chamber 2a serves as a load-side pressure chamber on which load pressure acts in the case in which the control valve 6 is in the neutral position 6C.

A load retaining mechanism 20 is disposed in the first main passage 7 connected to the load-side pressure chamber, that is, the rod-side pressure chamber 2a. The load retaining mechanism 20 retains the load pressure in the rod-side pressure chamber 2a when the control valve 6 is in the neutral position 6C. As shown in Fig. 1, the load retaining mechanism 20 is fixed to the surface of the cylinder 2.

In a cylinder 16 that drives a boom 12, a counter rod-side pressure chamber 16b serves as the load-side pressure chamber. Therefore, when providing the load retaining mechanism 20 to the boom 12, the load retaining mechanism 20 is disposed on the main passage connected to the counter rod-side pressure chamber 16b (see Fig. 1).

The load retaining mechanism 20 includes a check valve 21 disposed on the first main passage 7, and a switching valve 22 that operates in connection with the control valve 6 by pilot pressure oil supplied to a first pilot chamber 22a serving as the pilot chamber, via the pilot valve 10.

The check valve 21 allows the working oil to flow from the control valve 6 to the rod-side pressure chamber 2a, while restricting the flow of the working oil from the rod-side pressure chamber 2a to the control valve 6. That is to say, the check valve 21 prevents the working oil in the rod-side pressure chamber 2a from leaking and retains the load pressure, and keeps the stopped state of the arm 1.

The switching valve 22 is disposed in a bypass passage 23 that leads working oil on the side of the rod-side pressure chamber 2a with respect to the check valve 21 to the side of the control valve 6 with respect to the check valve 21, by bypassing the check valve 21. The switching valve 22 switches an opened or closed state of the bypass passage 23 in accordance with the pilot pressure supplied to the first pilot chamber 22a, and controls the flow of the working oil in the first main passage 7 when extending the cylinder 2.

When pilot pressure is leaded to the pilot chamber 6b of the control valve 6, pilot pressure of identical pressure is leaded simultaneously to the first pilot chamber 22a. That is to say, when the control valve 6 is switched to the extension position 6B, the switching valve 22 also opens.

Describing in more details, when no pilot pressure is leaded to the first pilot chamber 22a, the switching valve 22 maintains a disconnected state by an biasing force of a spring 24, and the bypass passage 23 is disconnected.

When pilot pressure is leaded to the first pilot chamber 22a and the switching valve 22 receives a force exceeding the biasing force of the spring 24 in the valve opening direction by the pilot pressure, the switching valve 22 opens and the bypass passage 23 is released. As a result, the working oil in the rod-side pressure chamber 2a is leaded from the bypass passage 23 to the first main passage 7 on the side of the control valve 6 with respect to the check valve 21, via the switching valve 22. That is to say, the working oil in the rod-side pressure chamber 2a is leaded to the control valve 6, by bypassing the check valve 21.

A relief passage 25 branches from and is connected to an upstream of the check valve 21 on the first main passage 7. The relief passage 25 disposes a relief valve 26 that opens when pressure in the rod-side pressure chamber 2a reaches a predetermined pressure and allows working oil to flow therethrough, and releases the working oil in the rod-side pressure chamber 2a. The working oil that passes through the relief valve 26 is discharged to the tank T via the discharging passage 27. An orifice 28 is disposed on the discharging passage 27, and pressure upstream of the orifice 28 is leaded to a second pilot chamber 22b. That is to say, the switching valve 22 also opens by the pressure of relief pressure oil leaded through the relief valve 26 to the second pilot chamber 22b.

A first main relief valve 13 is connected on the side of the control valve 6 with respect to the check valve 21 in the first main passage 7, and the second main passage 8 is connected to a second main relief valve 14. The first main relief valve 13 and the second main relief valve 14, when a large external force acts on the arm 1, release a high pressure occurring on the rod-side pressure chamber 2a and the counter rod-side pressure chamber 2b of the cylinder 2.

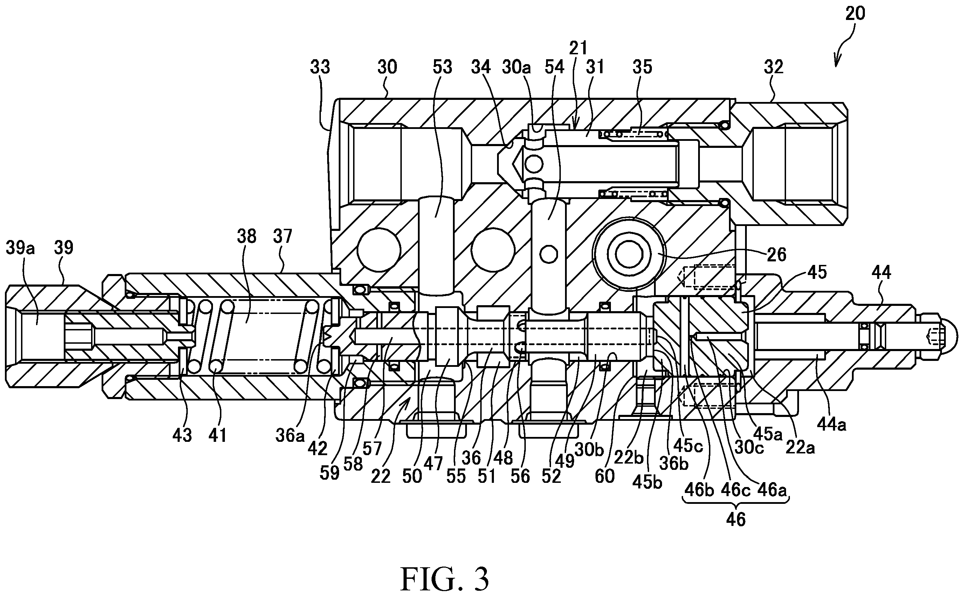

Next describes a structure of the load retaining mechanism 20, with reference to Fig. 3.

The check valve 21 is assembled in a body 30. The body 30 is formed having a sliding hole 30a, and in the sliding hole 30a, a valve element 31 of the check valve 21 is slidably assembled. The sliding hole 30a is formed penetrating through the body 30. One end (upstream end) of the sliding hole 30a is connected to the first main passage 7 on the side of the cylinder 2 via a plug 32, and the other end (downstream end) thereof is connected to the first main passage 7 on the side of the control valve 6 via a plug 33.

On an inner wall of the sliding hole 30a, a seat portion 34 is formed, which decreases in diameter as it progresses downstream. The valve element 31 is constantly pressed in a direction sitting on the seat portion 34, by biasing force of a spring 35 disposed between the valve element 31 and the plug 32.

The check valve 21 maintains a closed state with respect to the working oil flowing from the first main passage 7 on the side of the cylinder 2. Moreover, the check valve 21 opens when the valve element 31 receives a force exceeding the biasing force of the spring 35 by the pressure of the working oil flowing from the first main passage 7 on the side of the control valve 6.

The switching valve 22 is assembled inside the body 30. A spool hole 30b is formed in the body 30, and a spool 36 is assembled slidably in the spool hole 30b. On a side of one end plane 36a of the spool 36, a spring chamber 38 is defined by a cap 37. The spring chamber 38 communicates with a drain passage 40 (see Fig. 2) via a drain port 39a formed in a plug 39 that screws to an opening of the cap 37. The drain passage 40 communicates with a downstream of the orifice 28 in a discharging passage 27 (see Fig. 2) and connects to the tank T.

The spring chamber 38 accommodates a spring 41 serving as an biasing member for biasing the spool 36. Moreover, the spring chamber 38 accommodates an annular first spring holding member 42 whose end plane abuts one end plane of the spool 36, and an annular second spring holding member 43 that abuts a tip surface of the plug 39 screwed to the cap 37. The spring 41 is disposed in a compressed state between the first spring holding member 42 and the second spring holding member 43, and biases the spool 36 in the valve-closing direction via the first spring holding member 42.

On a side of the other end plane 36b of the spool 36, the pilot chambers 22a and 22b are defined by the piston hole 30c and cap 44. The piston hole 30c is formed in communication with the spool hole 30b. The cap 44 closes the piston hole 30c. A piston 45 is inserted slidably inside the pilot chambers 22a and 22b. The piston 45 includes a rear plane receiving pilot pressure, and applies thrust against the biasing force of the spring 41 to the spool 36 when the rea plane receives the pilot pressure.

The pilot chambers 22a and 22b are partitioned by the piston 45 into a first pilot chamber 22a facing the rear plane of the piston 45 and a second pilot chamber 22b facing the front plane of the piston 45 and the other end plane 36b of the spool 36. The first pilot chamber 22a is supplied with pilot pressure oil from the pilot valve 10 via a pilot port 44a formed in the cap 44. Leaded to the second pilot chamber 22b is relief valve oil having passed through the relief valve 26 via the discharging passage 27.

The piston 45 includes a sliding portion 45a whose outer circumferential surface slides along an inner circumferential surface of the piston hole 30c, a tip portion 45b facing the other end plane 36b of the spool 36, a groove portion 45c formed across the front plane of the piston 45 in a radial direction, and a conduction path 46 that allows the first pilot chamber 22a to communicate with the second pilot chamber 22b. The tip portion 45b is formed having a smaller diameter than that of the sliding portion 45a. The conduction path 46 is provided pierced through the sliding portion 45a.

The conduction path 46 includes an axial direction passage 46a defined by a hole pierced through from an end plane of the sliding portion 45a on the side of the cap 44 to around a center of the sliding portion 45a towards the tip portion 45b in an axial direction, a radial direction passage 46b defined by a hole pierced through from a tip of the axial direction passage 46a in a radial direction to penetrate through the sliding portion 45a, and an air removing throttle 46c defined by a hole provided at a joining part at the tip of the axial direction passage 46a with the radial direction passage 46b.

When pilot pressure oil is supplied in the first pilot chamber 22a via the pilot port 44a, the pilot pressure acts on the rear plane of the sliding portion 45a. This causes the piston 45 to move forward, which makes the tip portion 45b contact the other end plane 36b of the spool 36 and make the spool 36 move. As such, the spool 36 receives the thrust of the piston 45 generated based on the pilot pressure acting on the rear plane of the piston 45, and moves in the valve-opening direction against the biasing force of the spring 41.

When the relief pressure oil that has passed through the relief valve 26 is leaded in the second pilot chamber 22b via the discharging passage 27, the pressure of the relief pressure oil acts on the other end plane 36b of the spool 36. This causes the spool 36 to move in the valve-opening direction against the biasing force of the spring 41. Meanwhile, since the pressure of the relief pressure oil also acts on the piston 45, the piston 45 moves backwards and contacts the cap 44.

The spool 36 stops at a position in which the biasing force of the spring 41 acting on one end plane 36a is balanced with the thrust of the piston 45 acting on the other end plane 36b, and an aperture of the switching valve 22 is defined in accordance with the stopped position of the spool 36. The spool 36 moves in the valve-opening direction when the thrust of the piston 45 is greater than the biasing force of the spring 41, and moves in the valve-closing direction when the biasing force of the spring 41 is greater than the thrust of the piston 45.

The outer circumferential surface of the spool 36 is partially cut off annularly, and a poppet portion 47, a first land portion 48, and a second land portion 49 are formed in the order from the tip side in the valve-opening direction. The poppet portion 47 has an outer diameter greater than those of the first land portion 48 and the second land portion 49, and is formed in a tapered manner with its outer diameter increasing as it advances in the valve-opening direction.

The inner circumferential surface of the spool hole 30b is partially cut off annularly, and with this cut off parts and the outer circumferential surface of the spool 36, a first pressure chamber 50, a second pressure chamber 51, and a third pressure chamber 52 are formed in order from the tip side in the valve-opening direction.

The body 30 is formed having a first communication passage 53 that allows the first pressure chamber 50 to communicate with the first main passage 7, and a second communication passage 54 that allows the third pressure chamber 52 to communicate with the first main passage 7. The first communication passage 53 communicates with a downstream of the seat portion 34 of the check valve 21 in the first main passage 7, and the second communication passage 54 communicates with an upstream of the seat portion 34 of the check valve 21 in the first main passage 7. The first communication passage 53 and the second communication passage 54 form the bypass passage 23 together with the spool hole 30b.

The first pressure chamber 50 constantly communicates with the first main passage 7 at downstream of the seat portion 34 of the check valve 21. The second pressure chamber 51 is disconnected from the first pressure chamber 50 when the poppet portion 47 is seated on an annular projecting portion 55 projecting annularly inside in the radial direction from the inner circumferential surface of the spool hole 30b. The third pressure chamber 52 communicates constantly with am upstream of the seat portion 34 of the check valve 21 in the first main passage 7.

A plurality of notches 56 are formed on the outer circumference of the first land portion 48 of the spool 36. The notches 56 allow the third pressure chamber 52 to communicate with the second pressure chamber 51 when the spool 36 moves in the valve-opening direction. The second pilot chamber 22b is constantly communicated with the spring chamber 38 via a conduction hole 57 formed in the axial direction inside the spool 36, and a throttle passage 58. One end of the conduction hole 57 opens to the second pilot chamber 22b, and the other end is located in the vicinity of the spring chamber 38.

Here, operations of the switching valve 22 is described with reference to Fig. 3 to Fig. 5, and Fig. 6A and Fig. 6B.

As shown in Fig. 3, when no pilot pressure is leaded to the first pilot chamber 22a, the poppet portion 47 that is formed in the spool 36 is pressed against the annular projecting portion 55 formed on the inner circumference of the spool hole 30b, by the biasing force of the spring 41. Therefore, the communication between the second pressure chamber 51 and the first pressure chamber 50 is disconnected, and the communication between the first communication passage 53 and the second communication passage 54 is disconnected. This hinders the working oil in the rod-side pressure chamber 2a of the cylinder 2 from flowing to the side of the control valve 6 via the bypass passage 23.

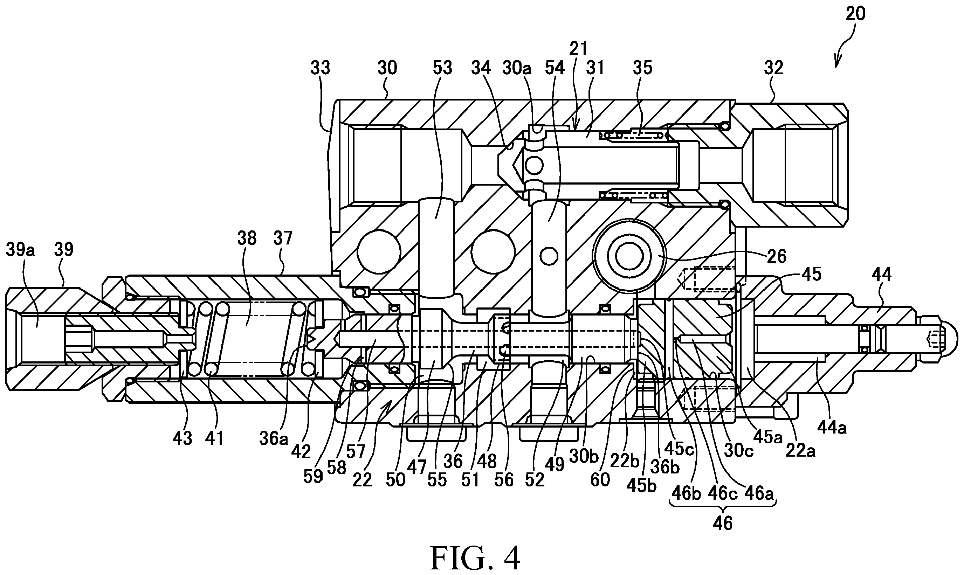

As shown in Fig. 4, when pilot pressure is leaded to the first pilot chamber 22a and the spool 36 receives thrust of the piston 45 greater than the biasing force of the spring 41, the spool 36 moves in the valve-opening direction against the biasing force of the spring 41. This causes the poppet portion 47 to separate away from the annular projecting portion 55, and causes the third pressure chamber 52 to communicate with the second pressure chamber 51 via the plurality of notches 56. Therefore, the second communication passage 54 communicates with the first communication passage 53 via the third pressure chamber 52, the notches 56, the second pressure chamber 51, and the first pressure chamber 50. This causes the working oil in the rod-side pressure chamber 2a to be leaded to the first main passage 7 on the side of the control valve 6 via the notches 56.

Furthermore, by the movement of the spool 36, the opening of the throttle passage 58 reaches an expanded diameter portion 59 of the cap 37. In the expanded diameter portion 59, the inner circumferential plane of the cap 37 is formed with a larger diameter. When the opening of the throttle passage 58 reaches the expanded diameter portion 59, the second pilot chamber 22b communicates with the spring chamber 38 via the conduction hole 57 and the throttle passage 58.

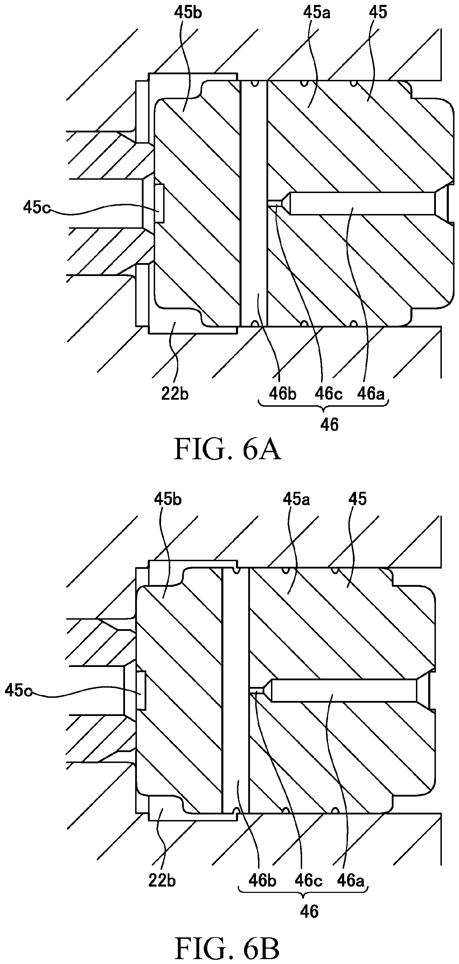

Fig. 6A is a partially enlarged view showing the piston 45 of Fig. 4 in an enlarged manner. The inner diameter of the second pilot chamber 22b is slightly larger than the outer diameter of a sliding portion 45a of the piston 45. In the state shown in Fig. 6A, the opening of the radial direction passage 46b of the piston 45 has not reached the second pilot chamber 22b. Therefore, the pilot pressure oil that is leaded to the first pilot chamber 22a remains in the first pilot chamber 22a without leaking into the second pilot chamber 22b. Therefore, in this state, the pilot pressure oil in the first pilot chamber 22a does not flow into the spring chamber 38 via the conduction hole 57 and the throttle passage 58.

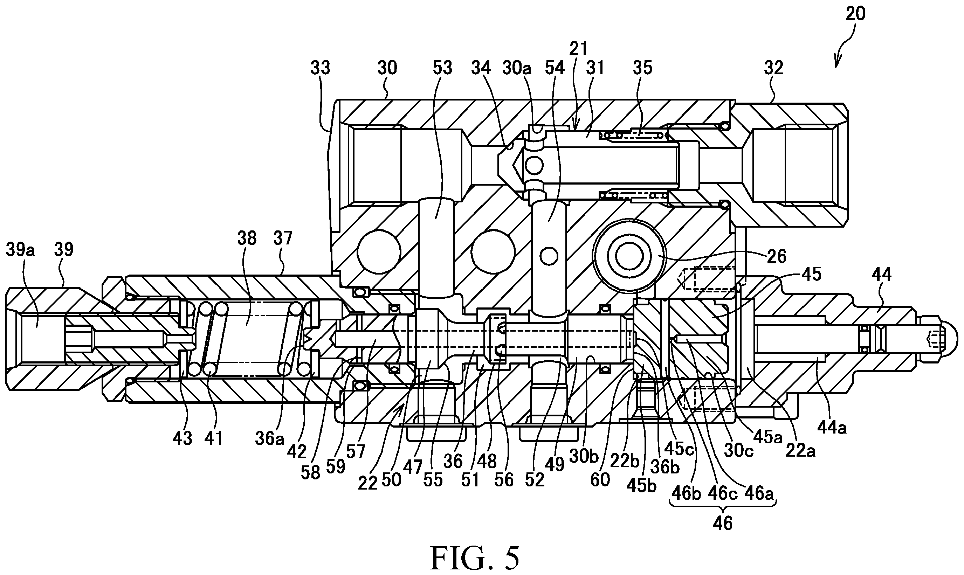

As shown in Fig. 5, when the pilot pressure that is leaded to the first pilot chamber 22a becomes large and the spool 36 moves to its full stroke position in the valve-opening position against the biasing force of the spring 41, the front plane of the piston 45 contacts a step portion 60 formed at a borderline between the piston hole 30c and the spool hole 30b. This causes the third pressure chamber 52 to communicate with the second pressure chamber 51 with an opening area larger than that in the state of Fig. 4. Thus, a flow rate of the working oil that is leaded from the rod-side pressure chamber 2a to the first main passage 7 on the side of the control valve 6 via the bypass passage 23 increases.

Furthermore, as with Fig. 4, since the opening of the throttle passage 58 faces the expanded diameter portion 59, the second pilot chamber 22b is continuously maintained in the communicated state with the spring chamber 38 via the conduction hole 57 and the throttle passage 58.

Fig. 6B is a partially enlarged view showing the piston 45 of Fig. 5 in an enlarged manner. As shown in Fig. 6B, when the piston 45 moves to the full stroke position, the opening of the radial direction passage 46b of the piston 45 opens to the second pilot chamber 22b. This causes the pilot pressure oil leaded to the first pilot chamber 22a to be leaded to the second pilot chamber 22b via the axial direction passage 46a and the radial direction passage 46b. Meanwhile, since the flow of the pilot pressure oil is throttled by the air removing throttle 46c provided between the axial direction passage 46a and the radial direction passage 46b, the pilot pressure in the first pilot chamber 22a is maintained at a predetermined pilot pressure.

The pilot pressure oil that is leaded to the second pilot chamber 22b is leaded to the conduction hole 57 inside the spool hole 30b via the groove portion 45c formed on the front plane of the piston 45. Furthermore, as shown in Fig. 5, the pilot pressure oil is leaded from the conduction hole 57 to the spring chamber 38 via the throttle passage 58, and is discharged to the drain passage 40 via the drain port 39a.

Here, as shown in Fig. 6A and Fig. 6B, when the stroke amount of the piston 45 becomes equal to or more than a predetermined stroke amount, the opening of the radial direction passage 46b of the piston 45 starts to open to the second pilot chamber 22b. This predetermined stroke amount is defined by a position that the radial direction passage 46b is formed. In the present embodiment, the predetermined stroke amount is set as a stroke amount slightly smaller than the stroke amount equivalent to a full stroke of the piston 45.

Next described are operations of the hydraulic control device 100 with reference to Fig. 2 to Fig. 5.

When the control valve 6 is in the neutral position 6C, the working oil that is discharged by the pump 4 is not supplied to the cylinder 2. Meanwhile, no pilot pressure is leaded to the first pilot chamber 22a of the switching valve 22; accordingly, the switching valve 22 maintains the disconnected state, and the bypass passage 23 is disconnected. The first main passage 7 is maintained in a state disconnected by the check valve 21. This prevents the leaking of the working oil in the rod-side pressure chamber 2a, and the stopped state of the arm 1 is retained.

When the operation lever 9 is operated and the pilot pressure is leaded from the pilot valve 10 to the pilot chamber 6a of the control valve 6, the control valve 6 switches to the contraction position 6A by an amount in accordance with the pilot pressure. When the control valve 6 switches to the contraction position 6A, the pressure of the working oil that is discharged by the pump 4 causes the check valve 21 to open. As a result, the working oil that is discharged from the pump 4 is supplied to the rod-side pressure chamber 2a, and the cylinder 2 contracts. This causes the arm 1 to lift up in the direction of arrow A shown in Fig. 1.

When the operation lever 9 is operated and the pilot pressure is leaded from the pilot valve 10 to the pilot chamber 6b of the control valve 6, the control valve 6 switches to the extension position 6B by the amount in accordance with the pilot pressure. Moreover, simultaneously to this, the pilot pressure is also leaded to the first pilot chamber 22a; accordingly, the switching valve 22 opens in accordance with the supplied pilot pressure.

The bypass passage 23 is released by this, and thus the working oil in the rod-side pressure chamber 2a is leaded to the control valve 6 by bypassing the check valve 21 from the first main passage 7, and is discharged from the control valve 6 to the tank T. Moreover, the working oil that is discharged by the pump 4 is supplied to the counter rod-side pressure chamber 2b, and thus the cylinder 2 extends. This causes the arm 1 to descend in the direction of arrow B shown in Fig. 1.

Here, in the manufacturing stage of the hydraulic shovel, particularly in the stage in which the load retaining mechanism 20 is attached to the hydraulic shovel and the pilot passage 15 is connected to the pilot port 44a of the load retaining mechanism 20, air is mixed inside the first pilot chamber 22a to which the pilot pressure is supplied. Moreover, air may also similarly mix therein after maintenance and long-term storage of the hydraulic shovel.

When the pilot pressure oil is leaded to the first pilot chamber 22a of the switching valve 22 by the lever operation of the operator in this state, the pilot pressure in the first pilot chamber 22a varies due to the volume change of the air, and may cause a response delay in the movement of the spool 36. This may cause a decrease in the operability of the cylinder 2.

In order to remove the air from the first pilot chamber 22a by discharging the air in the first pilot chamber 22a to the drain passage 40 via the second pilot chamber 22b, a structure can be considered in which the first pilot chamber 22a constantly communicates with the second pilot chamber 22b. However, with such a structure, the pilot pressure oil in the first pilot chamber 22a will constantly drain to the drain passage 40 even after the air is discharged upon movement of the spool 36 by a predetermined stroke amount or more. Therefore, the pilot pressure may become unstable. Particularly when performing an operation such as an inching operation in which lever operated amount by the operator is minute, this may cause a response delay or a variation in responsiveness in the opening and closing operation of the switching valve 22.

In the present embodiment, the conduction path 46 that allows the first pilot chamber 22a to communicate with the second pilot chamber 22b is provided in the piston 45. Furthermore, the conduction path 46 opens when the stroke amount of the piston 45 becomes equal to or more than the predetermined stroke amount that is slightly smaller than the full stroke amount.

Accordingly, no pilot pressure oil in the first pilot chamber 22a is leaded to the second pilot chamber 22b at the time of minute operation of the switching valve 22 where the stroke amount of the piston 45 is small. Therefore, the response delay and variation in responsiveness are prevented in the opening and closing operation of the switching valve 22 when performing the inching operation. Furthermore, when it is not a slight operation, that is to say, when the stroke amount of the piston 45 is large, the pilot pressure oil in the first pilot chamber 22a is leaded to the second pilot chamber 22b together with the air. Therefore, the air that is mixed into the first pilot chamber 22a is discharged.

According to the embodiment, the following effects are achieved.

The switching valve 22 includes a conduction path 46 that leads one part of the pilot pressure oil leaded to the first pilot chamber 22a, to the drain passage 40. The conduction path 46 communicates with the drain passage 40 when the piston 45 of the switching valve 22 moves by the predetermined stroke amount or more in the valve-opening direction. Therefore, at the time of slight operation in which the stroke amount of the switching valve 22 is small, the variation in the pilot pressure can be prevented, and when the stroke amount of the switching valve 22 is large, the air that is mixed in the first pilot chamber 22a can be discharged to the drain passage 40. Thus, air removal of the first pilot chamber 22a is possible while holding down the effect on the responsiveness.

Furthermore, the switching valve 22 includes the piston 45 that presses the spool 36 in the valve-opening direction in receiving the pilot pressure in the first pilot chamber 22a, and the conduction path 46 that allows the first pilot chamber 22a to communicate with the second pilot chamber 22b is formed in the piston 45. Therefore, the air removal can be performed without making the structure of the spool complex.

Furthermore, since the conduction path 46 is pierced through the inside of the piston 45, it is possible to prevent the pilot pressure oil from leaking via the outer circumference of the piston 45 from the conduction path 46, before the stroke amount of the piston 45 reaches the predetermined stroke amount. Thus, air removal of the first pilot chamber 22a is possible while securely suppressing the effect on the responsiveness.

### Second Embodiment

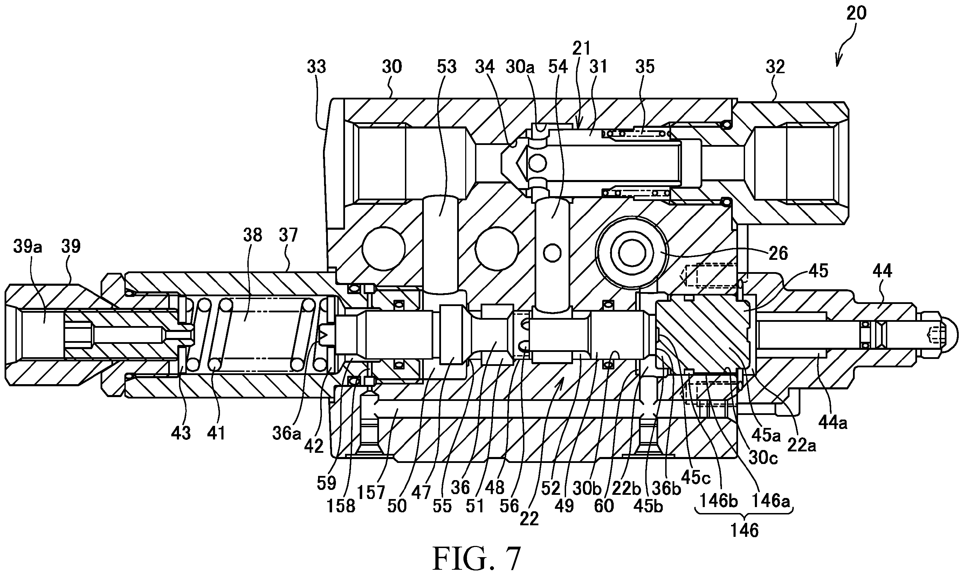

Next describes a second embodiment, with reference to Fig. 7, Fig. 8, and Fig. 9A to Fig. 9C.

In the present embodiment, the structure of a conduction path 146 differs from the first embodiment. Moreover, in the first embodiment, the conduction hole 57 that allows the second pilot chamber 22b to communicate with the spring chamber 38 is formed inside the spool 36, whereas in the present embodiment, a conduction hole 157 is newly formed in the body 30. One end (downstream end) of this conduction hole 157 is connected to a throttle passage 158 that allows the inside of the cap 37 to communicate with the outside of the cap 37 screwed to the body 30. This makes the second pilot chamber 22b communicate with the drain port 39a via the conduction hole 157, the throttle passage 158 and the spring chamber 38.

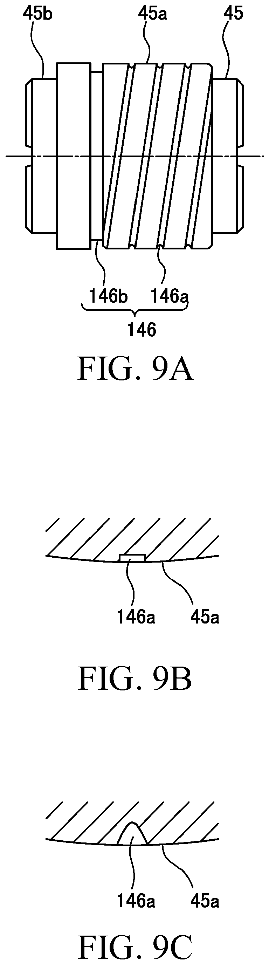

As shown in Fig. 7, the conduction path 146 is formed on the outer circumferential surface of the sliding portion 45a of the piston 45. Fig. 9A is a partially enlarged view showing the piston 45 of Fig. 7 in an enlarged manner. The conduction path 146 includes a spiral groove 146a serving as a groove formed in a spiral form on the outer circumferential surface of the sliding portion 45a of the piston 45, and a small diameter portion 146b serving as a groove formed on the outer circumferential surface of the sliding portion 45a. The small diameter portion 146b is connected to a terminal of the spiral groove 146a on the side of the piston front plane (left side in Fig. 9A). The small diameter portion 146b has a smaller diameter than that of the outer circumferential surface of the sliding portion 45a.

A cross sectional shape of the spiral groove 146a may be formed rectangular as shown in Fig. 9B, or may be formed in a V-shape as shown in Fig. 9C. The spiral groove 146a is sufficiently small in its cross section, and also functions as a throttle.

As shown in Fig. 7, when no pilot pressure is leaded to the first pilot chamber 22a, the piston 45 does not move. Therefore, the small diameter portion 146b does not open to the second pilot chamber 22b. Thus, the pilot pressure oil in the first pilot chamber 22a is not leaded to the second pilot chamber 22b.

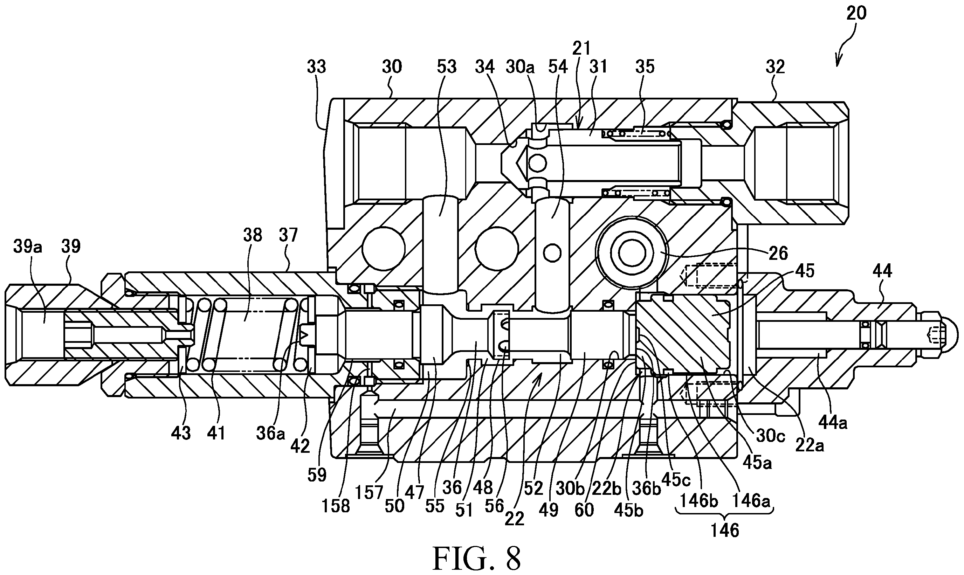

As shown in Fig 8, when the pilot pressure that is leaded to the first pilot chamber 22a becomes large and the piston 45 moves to the full stroke position, the small diameter portion 146b of the piston 45 opens to the second pilot chamber 22b. This causes the pilot pressure oil leaded to the first pilot chamber to be leaded to the second pilot chamber 22b via the spiral groove 146a and the small diameter portion 146b. Meanwhile, the flow of the pilot pressure oil is throttled by a throttle effect of the spiral groove 146a; accordingly, the pilot pressure in the first pilot chamber 22a is maintained at the predetermined pilot pressure.

The pilot pressure oil that is leaded to the second pilot chamber 22b is leaded to the spring chamber 38 via the conduction hole 157 formed in the body 30 and the throttle passage 158 formed in the cap 37, and is leaded to the drain passage 40 via the drain port 39a.

As with the first embodiment, when the stroke amount of the piston 45 becomes equal to or more than a predetermined stroke amount, the small diameter portion 146b of the piston 45 starts to open to the second pilot chamber 22b. This predetermined stroke amount is defined by the position that the small diameter portion 146b is formed. In the present embodiment, the predetermined stroke amount is set as a stroke amount slightly smaller than the stroke amount equivalent to a full stroke of the piston 45.

According to the above embodiment, the following effects are achieved.

Since the conduction path 146 is formed on the outer circumferential surface of the piston 45, the conduction path 146 can be formed just by forming a groove on the outer circumferential surface of the piston 45 with an end mill or like device. This facilitates the forming of the conduction path 146, and allows for reducing manufacturing costs.

### First Comparative Example

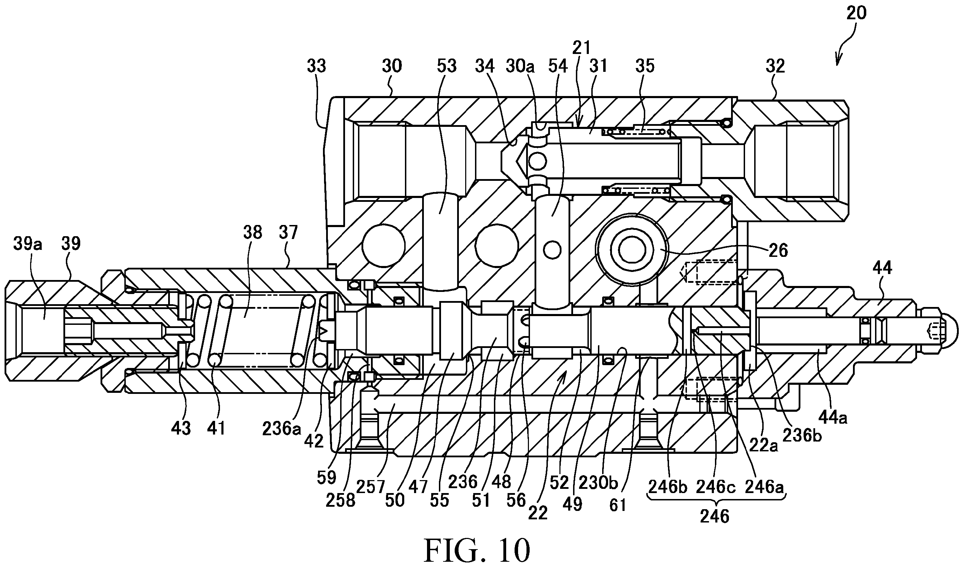

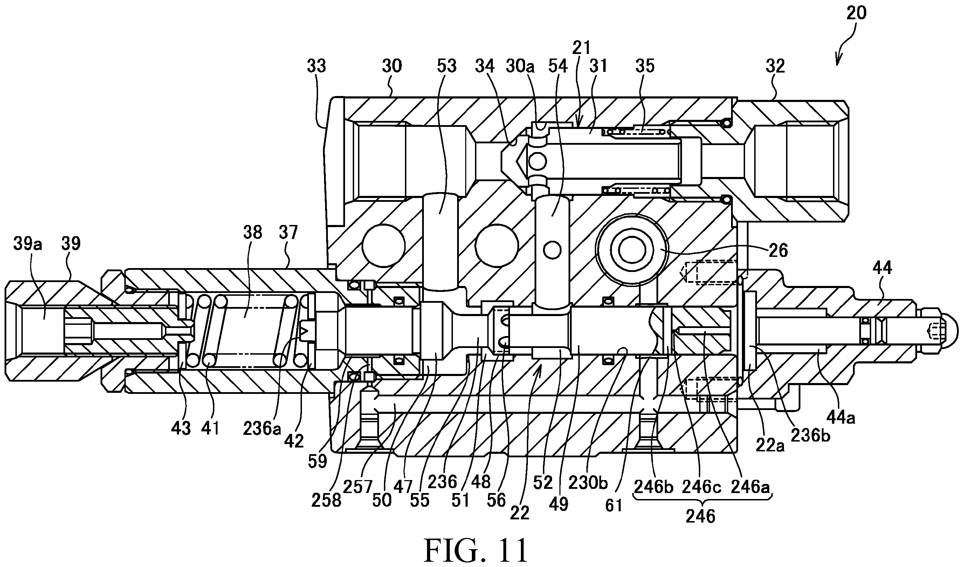

Next describes a first comparative example useful for better understanding the scope of the invention, with reference to Fig. 10 and Fig. 11.

In the first embodiment, the spool 36 and the piston 45 are formed as separate bodies, whereas in the present embodiment, the piston 45 and the piston hole 30c are omitted, and a spool hole 230b and a spool 236 extend in the axial direction. That is to say, the spool hole 230b communicates with the first pilot chamber 22a, and the other end plane 236b of the spool 236 faces the first pilot chamber 22a.

Moreover, in the first embodiment, the conduction hole 57 that allows the second pilot chamber 22b to communicate with the spring chamber 38 is formed inside the spool 36, whereas in the present comparative example, a conduction hole 257 is newly formed in the body 30. One end (downstream end) of this conduction hole 257 is connected to a throttle passage 258 that allows the inside of the cap 37 to communicate with the outside the cap 37 screwed to the body 30. Moreover, in the first embodiment, the working oil that has passed through the relief valve 26 is leaded to the second pilot chamber 22b, whereas in the present comparative example, instead of the pilot chamber 22b, a large diameter portion 61 is newly provided, which portion is formed by annularly cutting off the inner circumferential surface of the spool hole 230b. Since the internal diameter of the large diameter portion 61 is larger than the outer diameter of the spool 36, the working oil that has passed through the relief valve 26 is constantly leaded to the conduction hole 257 regardless of the axial direction position of the spool 236, and is leaded to the drain port 39a via the throttle passage 258 and the spring chamber 38.

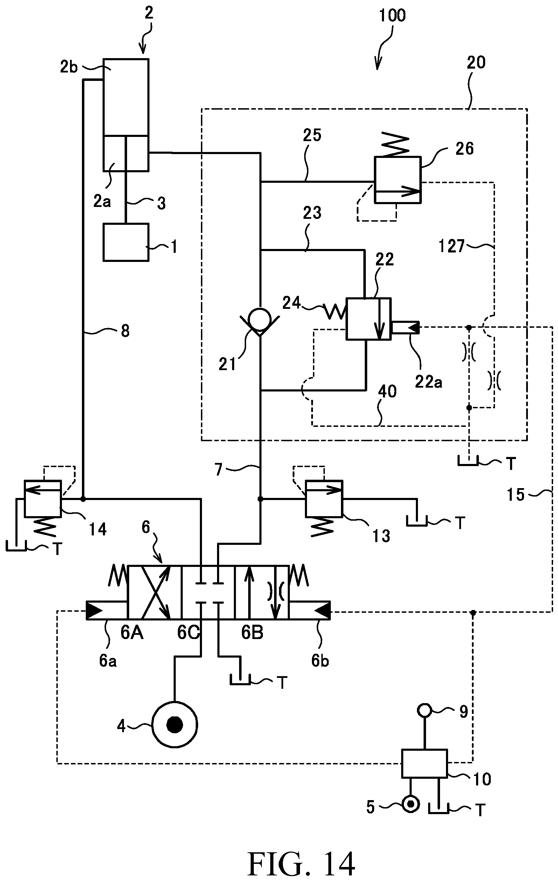

Furthermore, since the large diameter portion 61 opens to the outer circumference of the spool 36, the spool 236 does not receive force in the axial direction from the working oil having passed through the relief valve 26. Therefore, the hydraulic circuit diagram of the present comparative example is shown in Fig. 14, instead of Fig. 2 that shows the hydraulic circuit diagram of the first embodiment. That is to say, the working oil that has passed through the relief valve 26 is constantly discharged to the tank T, without acting on the switching valve 22. In Fig. 14, members having the same functions as those in Fig. 2 are provided with identical reference signs.

As shown in Fig. 10, the conduction path 246 is pierced through the inside of the spool 236. More specifically, the conduction path 246 includes an axial direction passage 246a defined by a hole pierced through in the axial direction from the other end plane 236b serving as a pressure receiving plane of the spool 36 to an one end plane 236a, a radial direction passage 246b defined by a hole pierced through in a radial direction from the tip of the axial direction passage 246a and penetrating through the spool 236, and an air removing throttle 246c defined by a hole provided at a joining part with the radial direction passage 246b at the tip of the axial direction passage 246a.

As shown in Fig. 10, when no pilot pressure is leaded to the first pilot chamber 22a, the spool 236 does not move. Therefore, the opening of the radial direction passage 246b does not open to the large diameter portion 61. Thus, no pilot pressure oil in the first pilot chamber 22a is leaded to the large diameter portion 61.

As shown in Fig. 11, when the pilot pressure that is leaded to the first pilot chamber 22a becomes large and the spool 236 moves to the full stroke position, the opening of the radial direction passage 246b of the spool 236 opens to the large diameter portion 61. This allows the pilot pressure oil leaded to the first pilot chamber 22a to be leaded to the large diameter portion 61 via the conduction path 246. Meanwhile, since the flow of the pilot pressure oil is throttled by the air removing throttle 246c, the pilot pressure in the first pilot chamber 22a is maintained at the predetermined pilot pressure.

The pilot pressure oil that is leaded to the large diameter portion 61 is leaded to the spring chamber 38 via the conduction hole 257 formed in the body 30 and the throttle passage 258 formed in the cap 37, and is leaded to the drain passage 40 via the drain port 39a.

As with the first embodiment, when the stroke amount of the spool 236 becomes equal to or more than a predetermined stroke amount, the radial direction passage 246b of the spool 236 starts to open to the large diameter portion 61. This predetermined stroke amount is defined by the position that the radial direction passage 246b is formed. In the present comparative example, the predetermined stroke amount is set to a stroke amount slightly smaller than a stroke amount equivalent to the full stroke of the spool 236.

According to the above comparative example, the following effects are achieved.

The other end plane 236b of the spool 236 receives the pilot pressure from the first pilot chamber 22a and the spool 236 moves in the valve-opening direction, and thus there is no need to provide a piston for receiving the pilot pressure. Therefore, the number of parts can be reduced.

Furthermore, since the conduction path 246 is pierced through inside the spool 236, it is possible to prevent the pilot pressure oil from leaking via the outer circumference of the spool 236 from the conduction path 246 before the stroke amount of the spool 236 reaches the predetermined stroke amount. Thus, air removal of the first pilot chamber 22a is possible while securely suppress the effect on the responsiveness.

Furthermore, since the conduction hole 257 is formed in the body 30, this allows for simplifying the structure of the spool 236, and allows for reducing manufacturing costs.

### Second Comparative Example

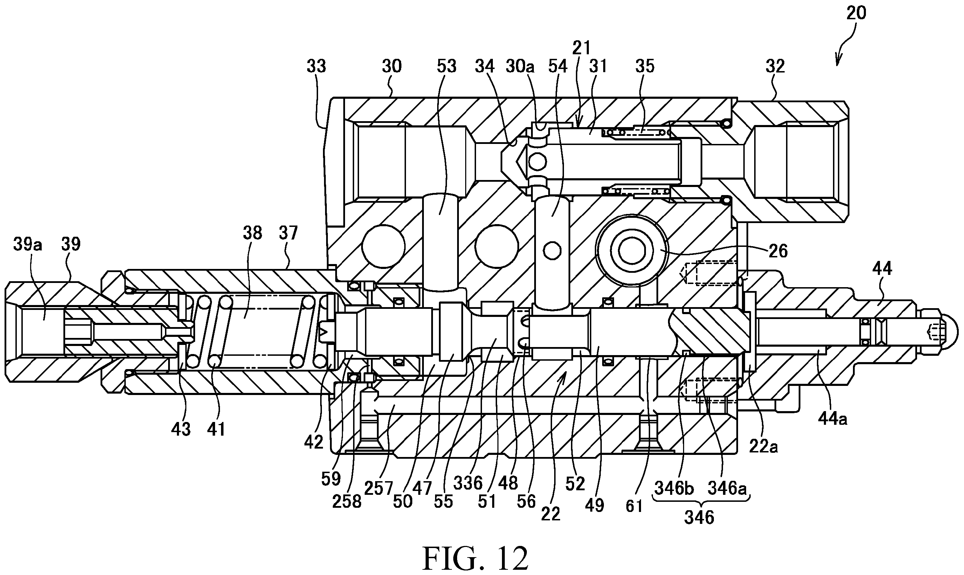

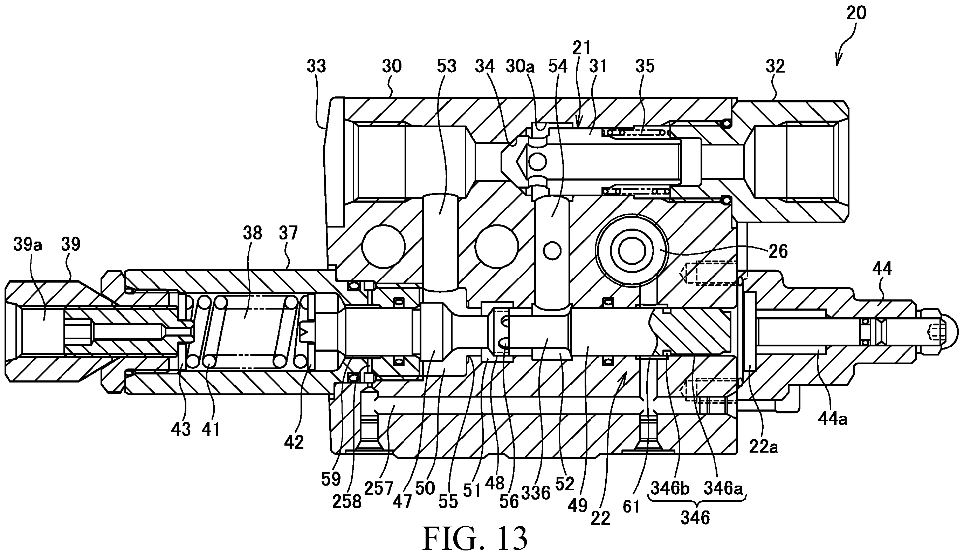

Next describes a second comparative example useful for better understanding the scope of the invention with reference to Fig. 12 and Fig. 13.

In the present comparative example, the structure of a conduction path 346 differs from that of the first comparative example, however other structures are identical to the first comparative example.

As shown in Fig. 12, the conduction path 346 is formed on the outer circumferential surface of the spool 36. The conduction path 346, as with the conduction path 146 shown in Fig. 9A, includes a spiral groove 346a serving as a groove formed in a spiral form on the outer circumferential surface of the spool 36, and a small diameter portion 346b serving as a groove formed on the outer circumferential surface of the spool 36. The small diameter portion 346b is connected to a terminal of the spiral groove 346a on the stroke side (left side in Fig. 12) of the spool 36. The small diameter portion 346b has a smaller diameter than that of the outer circumferential surface of the spool 336.

The cross section of the spiral groove 346a may be formed in a rectangular shape as with the spiral groove 14a shown in Fig. 9B, or may be formed in a V-shape as with the spiral groove 14a shown in Fig. 9C. The spiral groove 346a is sufficiently small in its cross section, and also functions as a throttle.

As shown in Fig. 12, when no pilot pressure is leaded to the first pilot chamber 22a, the spool 336 does not move. Therefore, the small diameter portion 346b does not open to the large diameter portion 61. Thus, no pilot pressure oil in the first pilot chamber 22a is leaded to the large diameter portion 61.

As shown in Fig. 13, when the pilot pressure that is leaded to the first pilot chamber 22a becomes large and the spool 336 moves to the full stroke position, the small diameter portion 346b of the spool 336 opens to the large diameter portion 61. This causes the pilot pressure oil leaded to the first pilot chamber 22a to be leaded to the large diameter portion 61 via the spiral groove 346a and the small diameter portion 346b. Meanwhile, since the flow of the pilot pressure oil is throttled by the throttle effect of the spiral groove 346a, the pilot pressure in the first pilot chamber 22a is maintained at the predetermined pilot pressure.

The pilot pressure oil that is leaded to the large diameter portion 61 is leaded to the conduction hole 257 formed in the body 30, and is discharged to the drain passage 40 via the throttle passage 258 formed in the cap 37, the spring chamber 38, and the drain port 39a.

As with the first comparative example, when the stroke amount of the spool 336 becomes equal to or more than a predetermined stroke amount, the small diameter portion 346b of the spool 36 starts to open to the large diameter portion 61. This predetermined stroke amount is defined by the position that the small diameter portion 346b is formed. In the present comparative example, the predetermined stroke amount is set to a stroke amount slightly smaller than a stroke amount equivalent to the full stroke of the spool 336.

According to the above comparative example, the following effects are achieved.

The conduction path 346 is formed on the outer circumferential surface of the spool 336. Accordingly, the conduction path 346 can be formed just by forming a groove on the outer circumferential surface of the spool 336 with an end mill or like device. This facilitates the forming of the conduction path 346, and allows for reducing manufacturing costs.

Embodiments of this invention and comparative examples useful for better understanding its scope were described above, but the above embodiments are merely examples of applications of this invention, and the technical scope of this invention is not limited to the specific constitutions of the above embodiments.

For example, in the above embodiments, cases in which working oil is used as the working fluid is exemplified; however, the working fluid may be liquid other than oil, for example water or an alternate water-soluble liquid.

Furthermore, in the above embodiments, the spring 41 is exemplified as the biasing member, however this may be any other extendable member that can bias the spool.

## Claims

1. A fluid pressure control device (100) comprising:
a cylinder (2) configured to extend and contract by working fluid supplied from a pump (4) to drive a load;
a control valve (6) configured to switch supply/discharge of the working fluid to/from the cylinder (2) to control the extending and contracting of the cylinder (2);
a pilot valve (10) configured to lead pilot pressure to the control valve (6);
a main passage (7) configured to connect the control valve (6) and a load-side pressure chamber (2a) of the cylinder (2) to which load pressure acts due to the load when the control valve (6) is in a neutral position; and
a load retaining mechanism disposed on the main passage (7) and configured to retain load pressure in the load-side pressure chamber (2a) when the control valve (6) is in the neutral position,
wherein the load retaining mechanism comprises:
a check valve (21) configured to allow the working fluid to flow only from the control valve (6) to the load-side pressure chamber (2a);
a bypass passage (23) configured to lead the working fluid in the load-side pressure chamber (2a) to the control valve (6) by bypassing the check valve (21); and
a switching valve (22) disposed on the bypass passage (23) and configured to switch an opened or closed state of the bypass passage (23),
the switching valve (22) comprises:
a pilot chamber (22a) to which pilot pressure is leaded via the pilot valve (10);
a spool (36) configured to move in a valve-opening direction in accordance with the pilot pressure in the pilot chamber (22a); and
a biasing member (24) configured to bias the spool (36) in a valve-closing direction; **characterized in that**
the switching valve (22) includes a piston (45) housed slidably within the pilot chamber (22a) and is configured to receive pilot pressure leaded via the pilot valve (10) to press the spool (36) in the valve-opening direction,
a conduction path (46, 146) is configured to lead one part of a pilot pressure fluid leaded to the pilot chamber (22a), to a drain passage (40), and
the conduction path (46, 146) is formed in the piston (45) and is configured to communicate with the drain passage (40) when the piston (45) receives pilot pressure and moves by the predetermined stroke amount or more.

2. The fluid pressure control device (100) according to claim 1, wherein
the conduction path (46) is a hole pierced through the piston.

3. The fluid pressure control device (100) according to claim 1, wherein
the conduction path (146) is a groove formed on an outer circumferential surface of the piston.

## Patentansprüche

1. Fluiddrucksteuervorrichtung (100) mit:
einem Zylinder (2), der konfiguriert ist, sich durch ein von einer Pumpe (4) zugeführtes Arbeitsfluid auszudehnen und zusammenzuziehen, um eine Last anzutreiben;
einem Steuerventil (6), das konfiguriert ist, die Zufuhr/Abgabe des Arbeitsfluids zu/von dem Zylinder (2) umzuschalten, um das Ausdehnen und Zusammenziehen des Zylinders (2) zu steuern;
einem Führungsventil (10), das konfiguriert ist, einen Führungsdruck zu dem Steuerventil (6) zu führen;
einem Hauptdurchgang (7), der konfiguriert ist, das Steuerventil (6) und eine lastseitige Druckkammer (2a) des Zylinders (2) zu verbinden, auf die ein Lastdruck aufgrund der Last wirkt, wenn das Steuerventil (6) sich in einer neutralen Position befindet; und
einem Lasthaltemechanismus, der auf dem Hauptdurchgang (7) vorgesehen ist und konfiguriert ist, einen Lastdruck in der lastseitigen Drucckammer (2a) zu halten, wenn das Steuerventil (6) sich in der neutralen Position befindet,
wobei der Lasthaltemechanismus umfasst:
ein Sperrventil (21), das konfiguriert ist, es dem Arbeitsfluid zu ermöglichen, lediglich von dem Steuerventil (6) zu der lastseitigen Drucckammer (2a) zu fließen;
einem Umgehungsdurchgang (23), der konfiguriert ist, das Arbeitsfluid in der lastseitigen Druckkammer (2a) durch Umgehen des Sperrventils (21) zu dem Steuerventil (6) zu führen; und
einem Schaltventil (22), das auf dem Umgehungsdurchgang (23) vorgesehen ist und konfiguriert ist, einen geöffneten oder geschlossenen Zustand des Umgehungsdurchgangs (23) umzuschalten,
wobei das Schaltventil (22) umfasst:
eine Führungskammer (22a), zu der der Führungsdruck über das Führungsventil (10) geführt ist;
einer Spule (36), die konfiguriert ist, sich gemäß dem Führungsdruck in der Führungskammer (22a) in eine Richtung offenen Ventils zu bewegen; und
einem Vorspannelement (24), das konfiguriert ist, die Spule (36) in eine Richtung geschlossenen Ventils vorzuspannen; **dadurch gekennzeichnet, dass**
das Schaltventil (22) einen Kolben (45) hat, der gleitfähig innerhalb der Führungskammer (22a) aufgenommen ist, und der konfiguriert ist, den über das Führungsventil (10) geführten Führungsdruck zu empfangen, um die Spule (36) in die Richtung offenen Ventils zu drücken,
wobei ein Leitungspfad (46, 146) konfiguriert ist, einen Teil eines Führungsdruckfluids, das zu der Führungskammer (22a) geführt ist, zu einem Entleerungsdurchgang (40) zu führen, und
der Leitungspfad (46, 146) in dem Kolben (45) ausgebildet ist und konfiguriert ist, mit dem Entleerungsdurchgang (40) in Verbindung zu sein, wenn der Kolben (45) den Führungsdruck empfängt und sich um ein vorbestimmtes Hubausmaß oder mehr bewegt.

2. Fluiddrucksteuervorrichtung (100) nach Anspruch 1, wobei
der Leitungspfad (46) eine durch den Kolben durchdringende Bohrung ist.

3. Fluiddrucksteuervorrichtung (100) nach Anspruch 1, wobei
der Leitungspfad (146) eine Nut ist, die an einer äußeren Umfangsoberfläche des Kolbens ausgebildet ist.

## Revendications

1. Dispositif de régulation de pression de fluide (100) comprenant :
un cylindre (2) configuré pour s'étendre et se contracter par du fluide de travail fourni par une pompe (4) afin d'entraîner une charge ;
une valve de commande (6) configurée pour commuter l'alimentation/l'évacuation du fluide de travail vers/depuis le cylindre (2) afin de commander l'extension et la contraction du cylindre (2) ;
une valve pilote (10) configurée pour conduire une pression pilote à la valve de commande (6) ;
un passage principal (7) configuré pour raccorder la valve de commande (6) et une chambre de pression côté charge (2a) du cylindre (2) sur laquelle la pression de charge agit en raison de la charge lorsque la valve de commande (6) est dans une position neutre ; et
un mécanisme de retenue de charge disposé sur le passage principal (7) et configuré pour retenir une pression de charge dans la chambre de pression côté charge (2a) lorsque la valve de commande (6) est dans la position neutre,
dans lequel le mécanisme de retenue de charge comprend :
un clapet antiretour (21) configuré pour permettre au fluide de travail de s'écouler seulement de la valve de commande (6) à la chambre de pression côté charge (2a) ;
un passage de dérivation (23) configuré pour conduire le fluide de travail dans la chambre de pression côté charge (2a) à la valve de commande (6) par dérivation du clapet antiretour (21) ; et
une valve de commutation (22) disposée sur le passage de dérivation (23) et configurée pour commuter un état ouvert ou fermé du passage de dérivation (23),
la valve de commutation (22) comprend :
une chambre pilote (22a) à laquelle une pression pilote est conduite via la valve pilote (10) ;
une bobine (36) configurée pour se déplacer dans une direction d'ouverture de valve selon la pression pilote dans la chambre pilote (22a) ; et
un élément de sollicitation (24) configuré pour solliciter la bobine (36) dans une direction de fermeture de valve ; **caractérisé en ce que**
la valve de commutation (22) inclut un piston (45) logé de manière coulissante dans la chambre pilote (22a) et est configurée pour recevoir une pression pilote conduite via la valve pilote (10) pour presser la bobine (36) dans la direction d'ouverture de valve,
un trajet de conduction (46, 146) est configuré pour conduire une partie d'un fluide de pression pilote conduit à la chambre pilote (22a), à un passage de drainage (40), et le trajet de conduction (46, 146) est formé dans le piston (45) et est configuré pour communiquer avec le passage de drainage (40) lorsque le piston (45) reçoit une pression pilote et se déplace de la quantité de course prédéterminée ou plus.

2. Dispositif de régulation de pression de fluide (100) selon la revendication 1, dans lequel
le trajet de conduction (46) est un trou percé au travers du piston.

3. Dispositif de régulation de pression de fluide (100) selon la revendication 1, dans lequel
le trajet de conduction (146) est une rainure formée sur une surface circonférentielle extérieure du piston.
